# EUROPÄISCHE PATENTANMELDUNG

(11) **EP 4 712 316 A1**
(43) Veröffentlichungstag der Anmeldung: **18.03.2026**
(21) Anmeldenummer: 24199792.3
(22) Anmeldetag: 11.09.2024
(51) Int. Cl.: H02K 5/15, H02K 5/18, H02K 11/33, H02K 9/04

(54) **MOTORINTEGRIERTER UMRICHTER IM LAGERSCHILD**

(71) Anmelder: Innomotics GmbH, 90441 Nürnberg (DE)
(72) Erfinder: Deeg, Christian, 90518 Altdorf (DE); Jordan, Philipp, 96114 Hirschaid (DE); Katzenberger, Tobias, 97631 Bad Königshofen STT Untereßfeld (DE); Koch, Thomas, 90459 Nürnberg (DE); Lehner, Johannes, 90762 Fürth (DE); Steinmüller, Marco, 97638 Mellrichstadt (DE); Tischmacher, Hans, 91207 Lauf (DE); Warmuth, Matthias, 97618 Windshausen (DE)
(74) Vertreter: Michalski Hüttermann & Partner Patentanwälte mbB

(57) **Zusammenfassung**

Die Erfindung betrifft einen Antrieb (30) mit
- zumindest einer dynamoelektrischen rotatorischen Maschine (1), die in einem Gehäuse (2) angeordnet ist, mit einem in einem Stator (4) angeordneten Wicklungssystem (5) und einem durch eine Luftspalt (23) davon getrennten Rotor (6), der über zumindest ein Lager (10) eines B-seitigen topfähnlichen Lagerschilds (7) um eine Achse (12) drehbar gelagert ist,
- zumindest einem Umrichter, wobei der Umrichter zumindest einige der folgenden Bauelemente , wie Leistungshalbleiter, Drosseln, Kondensatoren, Steuer- und Regeleinheiten und Kommunikationseinheiten in einem Bauvolumen (13) aufweist, wobei der Umrichter zumindest abschnittsweise von dem B-seitigen Lagerschild (7) radial umgeben ist und dabei zumindest einige Bauelemente des Umrichters mit dem Lagerschild (7) thermisch leitend verbunden sind, indem insbesondere wärmeintensive Bauelemente des Umrichters, an einer inneren Seitenwand (20) des topfähnlichen Lagerschilds (7) angeordnet sind,
- wobei der Umrichter axial betrachtet zwischen der dynamoelektrischen rotatorischen Maschine (1) und dem Lager des B-seitigen topfähnlichen Lagerschilds (7) angeordnet ist.

## Beschreibung

Die Erfindung betrifft einen Antrieb mit einer dynamoelektrischen Maschine und einem Umrichter, die axial hintereinander in einem Innenraum der dynamoelektrischen Maschine angeordnet sind.

Für drehzahlveränderbare dynamoelektrische Maschinen, wie Elektromotoren, vor allem Synchron-, Asynchron-, und Reluktanzmotoren werden Frequenzumrichter zum Einstellen der gewünschten Drehzahl benötigt.

Die Frequenzumrichter werden für gewöhnlich in eigenen Schaltschränken vorgesehen oder sind auch außen am Gehäuse der dynamoelektrischen Maschine angebaut. Hierbei gibt es verschiedene Varianten den Umrichter am Gehäuse anzubauen. Zum Beispiel als Aufsatz mit eigener Belüftung oder auch mit integrierter Belüftung durch den Motorlüfter.

Eine derartige Antriebseinheit ist beispielsweise aus der DE 198 12 729 A1 bekannt. Dort ist ein Elektromotor beschrieben, insbesondere mit einem Lüfterrad zur Bildung eines Axial- oder Radiallüfters. Diese Antriebseinheit weist ein Steuerungsgehäuse mit einer Steuereinheit auf, wobei die Antriebseinheit einen Stator, ein Läufer und zumindest eine elektrische Spule aufweist und wobei die Steuereinheit eine elektronische Schaltung zur Steuerung oder Regelung der Stromzufuhr zur Spule aufweist. Die Antriebseinheit und die Steuereinheit sind durch Module gebildet und einander zugeordnete Kontaktelemente sind zur gegenseitigen elektrischen Verbindung vorgesehen.

Ebenso ist eine derartige Anordnung aus der DE 38 42 588 A1 bekannt. Dort ist ein kollektorloser Gleichstrom-Außenläufermotor beschrieben, der aus einem an einem Motorflansch befestigten Stator mit Statorwicklungen, einem den Stator auf seiner dem Motorflansch abgekehrten Seite umschließenden Außenläufer, sowie einer elektronischen, die Statorwicklungen ansteuernden Schaltungsanordnung besteht. Diese Schaltungsanordnung besitzt eine flanschseitig dem Stator zugekehrten angeordnete, elektronischen Bauelemente tragende Leiterplatte sowie mehrere an der Leiterplatte elektrisch angeschlossene, in wärmeleitendem Kontakt mit dem Motorflansch angeordnete Leistungshalbleiter. Die Leistungshalbleiter sind mittelbar über einen ringscheibenförmigen Kühlkörper mit dem Motorflansch wärmeleitend verbunden.

Diese Ausführungen der Montage direkt am Motor benötigen viel Bauraum und machen den Antrieb vergleichsweise groß und schwer.

Ausgehend davon liegt der Erfindung die Aufgabe zugrunde, einen kompakten, einfach aufgebauten Antrieb für vielfältige Anwendungen zu schaffen.

Die Lösung der gestellten Aufgabe gelingt durch einen motorintegrierten Umrichter gemäß den Merkmalen der unabhängigen Ansprüche.

Vorteilhafte Ausgestaltungen sind den abhängigen Ansprüchen zu entnehmen.

Erfindungsgemäß ist der Antrieb mit zumindest einer dynamoelektrischen rotatorischen Maschine, einer Synchronmaschine, Asynchronmaschine oder Reluktanzmaschine ausgestattet, die in einem Gehäuse angeordnet ist. Ein in das Gehäuse eingeschrumpfter oder eingepresster Stator weist in seinem im Wesentlichen axial verlaufenden Nuten ein Wicklungssystem auf, das bei Bestromung mit einem, durch eine Luftspalt getrennten Rotor aufgrund elektromagnetischer Wechselwirkungen ein Drehmoment erzeugt.

Diese Einpassung des Stators schafft einen vergleichsweise guten Wärmeübergang vom Blechpaket des Stators auf das Gehäuse und optionalen Gehäuserippen. Der Rotor ist über zumindest ein Lager eines B-seitigen topfähnlichen Lagerschilds um seine Achse drehbar gelagert.

Bei einer dynamoelektrischen Maschine, wie einem Motor gibt es eine A-Seite (Antriebsseite; Drive-End; DE-Seite), deren eines Wellenende zu Wellenanbauelementen, wie Antriebselementen und/oder einer Arbeitsmaschine weist und mit dieser Arbeitsmaschine mechanisch gekoppelt wird. Die B-Seite des Motors liegt am anderen Wellenende (Non-Drive-End; NDE-Seite).

Des Weiteren weist der Antrieb zumindest einen Umrichter auf, der je nach Ausführung als Umrichter mit Zwischenkreis, als Direktumrichter etc. zumindest einige der folgenden Bauelemente, wie Leistungshalbleiter, Drosseln, Kondensatoren, Steuer- und Regeleinheiten und Kommunikationseinheiten aufweist. Der Umrichter ist zumindest abschnittsweise von dem B-seitigen Lagerschild radial umgeben und dabei sind zumindest einige Bauelemente des Umrichters mit dem Lagerschild thermisch leitend verbunden sind, indem insbesondere wärmeintensive Bauelemente des Umrichters, an einer inneren Seitenwand des topfähnlichen Lagerschilds angeordnet sind. Der Umrichter ist axial betrachtet zwischen der dynamoelektrischen rotatorischen Maschine und dem Lager des B-seitigen topfähnlichen Lagerschilds angeordnet.

Die Leistungshalbleiter des Umrichters, wie IGBTs, als besonders wärmeintensive Bauelemente des Umrichters stehen in thermisch direkt leitfähigem Kontakt mit dem Lagerschild, insbesondere mit der Seitenwand des topfähnlichen B-seitigen-Lagerschildes. Damit ist eine direkte wärmetechnische Kopplung an die Seitenwände des topfähnlichen Lagerschildes gegeben, sodass die Wärmeabfuhr aus dem Umrichter insbesondere über die Seitenwände erleichtert wird.

In einer weiteren Ausführung kann der Umrichter bzw. Bauelemente des Umrichters auch in einem A-seitigen-Lagerschild erfindungsgemäß angeordnet sein.

Ebenso ist eine Aufteilung der Bauelemente eines Umrichters auf beide Lagerschilde denkbar.

Dies gelingt vor allem, indem die Leistungshalbleiter des Umrichters, wie die IGBTs in axial verlaufenden, tangential ausgerichteten Taschen an der inneren Seitenwand des topfähnlichen Lagerschilds angeordnet sind.

Durch einen wärmeleitfähigen Verguss der Leistungshalbleiter des Umrichters mit der inneren Seitenwand des Lagerschildes ergibt sich ein zusätzlich verbesserter thermisch leitfähigem Kontakt zwischen den Bauelementen des Umrichters und dem Lagerschild.

Mittels einer konischen Ausbildung der Taschen wird der thermisch leitfähige Kontakt zwischen den Bauelementen des Umrichters und dem Lagerschild optional und/oder zusätzlich verbessert werden. Dies gelingt ebenso durch Verspann- oder Federelemente, die einen vergleichsweise guten thermisch leitfähigem Kontakt zwischen den Bauelementen des Umrichters und dem Lagerschild schaffen. Diese Verspann- oder Federelemente sind innerhalb und/oder außerhalb der Tasche vorgesehen.

Mittels eines Druckgussverfahren kann das Lagerschild und in dem Lagerschild verschiedenste vorgesehene Geometrien, wie z.B. die Taschen eingebracht werden, so dass u.a. die IGBTs ohne zusätzliches Verschrauben befestigt werden können. Dies kann durch Klipsen, Verspannen oder Einschieben der IGBTs in eine konische Schiene der Tasche oder ähnliches erfolgen. Zur Fixierung der IGBTs und zum besseren Abtransport der Verlustenergie werden diese optional noch mit speziellem wärmeleitfähigem Harz vergossen/verklebt.

Eine optional zusätzliche Lüftereinheit, die als Eigen- und/oder Fremdbelüftung ausgeführt ist und die einen Luftstrom, zumindest abschnittsweise um das Lagerschild und/oder das Gehäuse schafft, verbessert zusätzlich die erforderliche Kühlwirkung. Diese Lüftereinheit ist in axialer Verlängerung an die NDE-Seite anbringbar.

Axial und/oder radial ausgerichtete Kühlrippen am Lagerschild und/oder Gehäuse der dynamoelektrischen rotatorischen Maschine steigern die Kühleffizienz des Antriebs.

Diese Kühlrippen am Außendurchmesser sorgen für eine sehr gute Kühlung der Elektronikkomponenten. Die Kühlrippen sind ideal im Kühlluftstrom des Motors angeordnet und sorgen somit für eine hocheffizienten Abtransport der Verlustenergie.

Die axial verlaufenden Kühlrippen von Lagerschild und Gehäuse sind entweder axial fluchtend oder um einen vorgegebenen Winkelversatz versetzt ausgerichtet, um je nach Ausführung die Kühlleistung zu verbessern. Umfänglicher Versatz der Kühlrippen von Gehäuse und Lagerschild um einen halben Abstand zwischen zwei Gehäuserippen erhöht Verwirbelungen, sodass u.a. eine turbulente Strömung eine verbesserte Kühlwirkung erzielt.

Es wird die somit die gesamte Leistungselektronik im Innenraum des Motors direkt an dem Lagerschild, an den Seitenwänden und/oder dem Topfboden angebracht. Durch die Integration der Leistungselektronik in das Lagerschild und somit in den Motorinnenraum, werden erfindungsgemäß sehr viele Funktionen (Aufnahme des Lagers, Fixierung der Leistungs- und der Steuerelektronik etc.) zusammengefasst und zum anderen der Freiraum im Motorinnenraum ideal ausgenutzt.

Zudem können auch Befestigungsgewinde im Lagerschild mit eingebracht werden, um weitere modulare Anbauten, wie Sensoreinrichtungen und/oder Kommunikationseinrichtungen anzubringen.

Das Lager auf der NDE-Seite, insbesondere ein Kugellager wird axial von außen montiert bzw. bei einem Lagerwechsel demontiert. Dies gestattet auch eine sehr gute Austauschbarkeit im Fehlerfall, ohne den Motor von der Arbeitsmaschine auf der A-Seite trennen zu müssen und den Umrichter auszubauen.

Der Umrichter bzw. das Bauvolumen des Umrichters weist mittig einen Durchgang für die Welle auf. Die Leistungselektronik des Umrichters benötigt dazu im Inneren lediglich einen Durchgang für die Motorwelle (Durchmesser Motorwelle + 1mm = Wellendurchgang in dem Umrichter) und nicht wie üblich einen großen Durchgang für das Lager. Das schafft zusätzlichen Bauvolumen für die Bauelemente des Umrichters z.B. die Leistungselektronik und macht das Motor-Umrichter System vor allem axial noch kompakter.

Stellvertretend sei bei dem folgenden Rechenbeispiel auf eine Ausführung der Achshöhe (AH) für AH90 hingewiesen:
Ø Motorwelle ist 28,5mm
   → Durchgang in der Leistungselektronik bei Lagermontage von außen: Ø28,5mm + 1mm = 29,5mm
   → Durchgang in der Leistungselektronik bei der bisherigen Standard Lagermontage von innen (also Lager befindet sich zwischen Motor und Umrichter): Kugellager 6304 Außendurchmesser:
Ø52mm +1mm = Ø53mm

Bei einer axialen Länge des Umrichters von 65mm ergibt sich ein zusätzliches Bauvolumen von 98974mm³.

Das Lagerschild weist somit erfindungsgemäß eine Funktionsintegration u.a. von Leistungselektronik im Motorinnenraum auf. Die Bauelemente des Umrichters benötigen kein eigenes Gehäuse, weil alle Befestigungspunkte in das B-seitige-Lagerschild integriert sind. Dadurch wird der Bauraum des Motors optimal ausgenutzt und es entsteht ein Antrieb mit einem kompakten Motor-Umrichtersystem. Es besteht keine Behinderung eines Modulkonzeptes auf der NDE Seite des Motors, d.h. alle denkbaren Anbauten an das NDE-Wellenende, wie Bremse, Fremdlüfter, oder ein Geber, wie z.B. ein Drehimpulsgeber sind weiter möglich.

Das B-seitige-Lagerschild kann im Vorfeld mit den gesamten Bauelementen des Umrichters bestückt und ggf. vergossen werden. So entsteht ein einbaufertiges Umrichtersystem. Dieses Umrichtersystem kontaktiert über seinen Eingangsstromrichter und ein Klemmbrett eines Klemmenkasten die Netzspannung, während die Ausgangsseite des Umrichtersystems mit dem Wicklungssystem des Motors kontaktiert ist. Diese Kontaktierungen erfolgen vorzugsweise beim Einbau des Lagerschildes an das Gehäuse.

Das B-seitige-Lagerschild ist im Wesentlichen topfförmig ausgestaltet. Der Topfboden weist eine Aussparung auf, durch die die Welle ragt, die u.a. die Antriebswelle der Kühleinheit, insbesondere eines Lüfters bildet. An diese Welle sind auch die oben gewähnten Anbauten drehfest anbringbar. Die Seitenwand weist an ihrer umfänglichen Außenseite axial erstreckende Rippen auf. Die Innenseite des topfförmig ausgeführten Lagerschildes ist vorzugsweise polygonal ausgeführt, um insbesondere die Leistungshalbleiter möglichst direkt an der Innenseite des Lagerschildes und damit an der Wärmesenke einfach anordnen zu können. Damit wird eine vergleichsweise thermisch gute Anbindung dieser Bauelemente an der Seitenwand des Lagerschildes gewährleistet.

Das Umrichtersystem weist je nach Ausführung somit Leistungshalbleiter, Drosseln, Kondensatoren, Steuer- und Regeleinheiten und Kommunikationseinheiten auf, die in dem vorgegebenen Bauvolumen untergebracht sind. Vorzugsweise sind vor allem die großen Wärmequellen, wie z.B. die Leistungshalbleiter der Eingangs- und Ausgangsstromrichter an der inneren Seitenwand des topfähnlich ausgebildeten B-seitigen-Lagerschildes mit einem vergleichsweise geringen Wärmeübergangswiderstand thermisch gekoppelt.

Über eine thermische Kopplung an die umfänglichen Seitenwände und die Stirnseite des Lagerschildes, also den "Topfboden" werden die Bauelemente des Umrichtersystems, vor allem die Leistungshalbleiter, aber auch die Steuer- und Regelelektroniken gekühlt.

Das Lagerschild ist aus vergleichsweise thermisch gut leitfähigem Material, wie Grauguss, Stahl, Messing/Bronze, Kunststoff mit hoher Wärmeleitfähigkeit, Aluminium oder einer Aluminiumlegierungen.

Der Stator erzeugt ebenso Wärme, die u.a. den Innenraum der dynamoelektrischen rotatorischen Maschine aufheizt. Dieser Wärmeeintrag wird ebenfalls durch die das Gehäuse und die Lagerschilde umströmende Luft abgeführt. Des Weiteren ist der Stator vorzugsweise in einen Mantel des Gehäuses eingeschrumpft, um einen vergleichsweise guten Wärmeübergang vom Blechpaket des Stators auf das Gehäuse und die Gehäuserippen zu erhalten.

Eine insbesondere als Eigenlüfter ausgeführte Kühleinheit generiert im Betrieb der dynamoelektrischen rotatorischen Maschine einen Kühlluftstrom, der zunächst radial entlang des Topfbodens des Lagerschildes und danach die äußere Seitenwand des Lagerschildes geführt ist. Eine Lüfterhaube, die sich axial Richtung AS-Lager erstreckt, führt den Kühlluftstrom auch entlang der Kühlrippen von Lagerschild und Gehäuse der dynamoelektrischen rotatorischen Maschine.

Die Erfindung sowie weitere vorteilhafte Ausgestaltungen der Erfindung werden anhand prinzipieller dargestellter Ausführungsbeispiele näher dargestellt; darin zeigen:
- FIG 1,2,3: einen prinzipiellen Längsschnitt eines erfindungsgemäßen Antriebs,
- FIG 4: eine perspektivische Darstellung eines Antriebs,
- FIG 5: eine teilperspektivische Darstellung des Lagerschildes,
- FIG 6,7: perspektivische Darstellungen des Lagerschildes,
- FIG 8: einen Querschnitt des Antriebs,
- FIG 9-11: verschiedene Befestigungsarten von Leistungshalbleitern am Lagerschild,
- FIG 12: eine prinzipielle Darstellung der Anlageflächen der Leistungshalbleiter im Lagerschild,
- FIG 13: eine perspektivische Schnitt-Darstellung eines Antriebs.

Es sei angemerkt, dass sich Begriffe wie "axial", "radial", "tangential" etc. auf die in der jeweiligen Figur bzw. im jeweils beschriebenen Beispiel zum Einsatz kommende Achse 12 beziehen. Mit anderen Worten beziehen sich die Richtungen axial, radial, tangential stets auf eine Achse 12 des Rotors 6 und damit auf die entsprechende Symmetrieachse des Stators 4. Dabei beschreibt "axial" eine Richtung parallel zur Achse 12, "radial" beschreibt eine Richtung orthogonal zur Achse 12, auf diese zu oder auch von ihr weg, und "tangential" ist eine Richtung, die in konstantem radialem Abstand zur Achse 12 und bei konstanter Axialposition kreisförmig um die Achse 12 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 6 und Stator 4, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

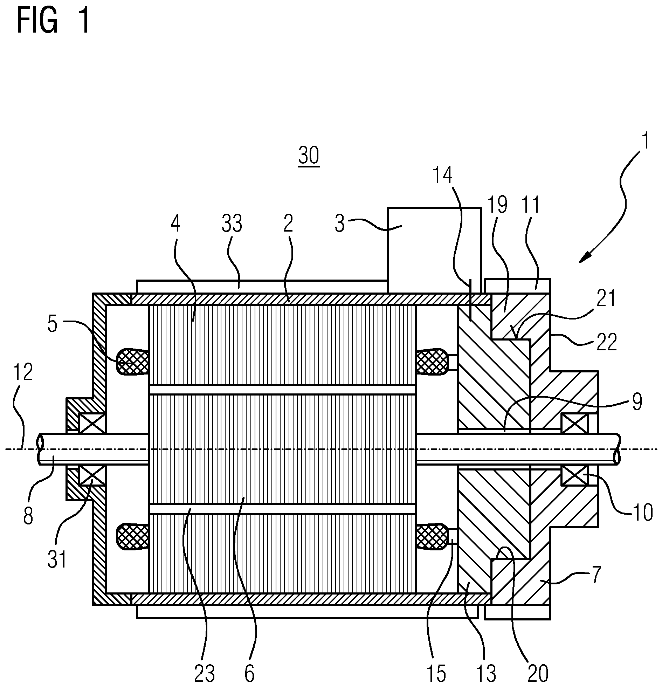

FIG 1 zeigt einen Antrieb 30 mit einer dynamoelektrischen rotatorischen Maschine 1 und einem Umrichter. Die dynamoelektrische rotatorische Maschine 1 weist einen Stator 4 auf, der aus axial geschichteten Blechen ein Blechpaket bildet. In im Wesentlichen axial verlaufenden Nuten des Blechpakets des Stators 4 ist ein, einem Luftspalt 23 zugewandtes Wicklungssystem 5 angeordnet, das an den Stirnseiten des Blechpakets des Stators 4 Wickelköpfe ausbildet. Drehfest mit einer Welle 8 ist ein Blechpaket eines Rotors 6 verbunden, das in elektromagnetischer Wechselwirkung mit dem bestromten Wicklungssystem 5 des Stators 4 steht und so zu einer Rotation der Welle 8 um eine Achse 12 führt. Die Welle 8 ist in zwei Lagern 10, 31 drehbar gehalten, einem AS-Lager 31 und einem BS-Lager 10.

Der Rotor 6 kann als Asynchronläufer, permanenterregter Läufer oder Reluktanzläufer ausgeführt sein.

Die dynamoelektrische rotatorische Maschine 1 ist von einem Gehäuse 2 umgeben, das an den Stirnseiten von Lagerschilden begrenzt ist. Das BS-Lager 10 ist von seinem B-seitigen topfartig ausgestalteten Lagerschild 7 gehalten. Das Gehäuse 2 und das B-seitigen topfartig ausgestalteten Lagerschild 7weisen an ihrem Außenumfang axial verlaufende Kühlrippen 11 auf.

Das B-seitige Lagerschild 7 ist über seine Seitenwände 19 mit dem Gehäuse 2 verbunden. Ein der die dynamoelektrische rotatorische Maschine 1 speisender Umrichter, mit folgenden Bauelemente, wie Leistungshalbleiter, Drosseln, Kondensatoren, Steuer- und Regeleinheiten und Kommunikationseinheiten ist in dem mit "13" bezeichneten Bauvolumen untergebracht. Eine Kontaktierung 14, 15 der jeweils relevanten Bauelemente des Umrichters zu einem Klemmenkasten 3 oder zu dem Wicklungssystem 5 erfolgt über Steckkontakte.

Eine Verdrahtung von Leistungs- bzw. Steuerkabeln 14 wird vorzugsweise über den Klemmenkasten 3 realisiert. Nur am Klemmenkasten 3 muss/darf ein Anwender sämtliche Verdrahtung vornehmen.

Der Umrichter ist ortsfest und weist einen Wellendurchgang 9 auf, der lediglich ca. 1mm Abstand seiner radial innenliegenden Bauelementen zur Welle 8 aufweist. Aus diesem Grund ist das BS-Lager 10 am Topfboden 22 des Lagerschildes 7 angeordnet. Ein Lagerwechsel ist somit einfacher möglich, bei gleichzeitiger Maximierung des Bauvolumens 13.

Innerhalb des Bauvolumens 13 sind vor allem die Bauelemente des Umrichters, die einer intensiveren Kühlung bedürfen, wie z.B. die Leistungselektronik an den inneren Seitenwänden 20 des Lagerschildes 7, und in dieser Ausführung, auch an den axial benachbarten Gehäuseabschnitt thermisch gekoppelt.

Die Lageraufnahme des Lagers 10 ist in dieser Ausführung tubusförmig gestaltet, was eine Demontage des Lagers 10 erleichtert.

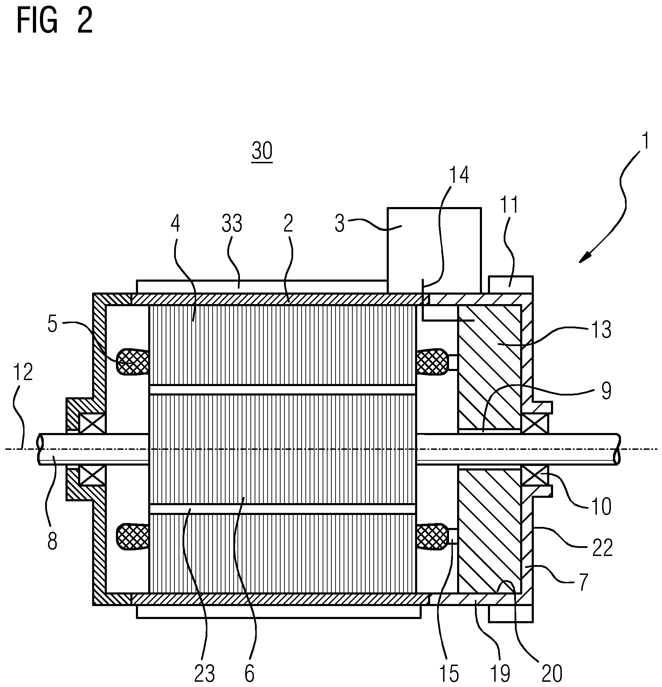

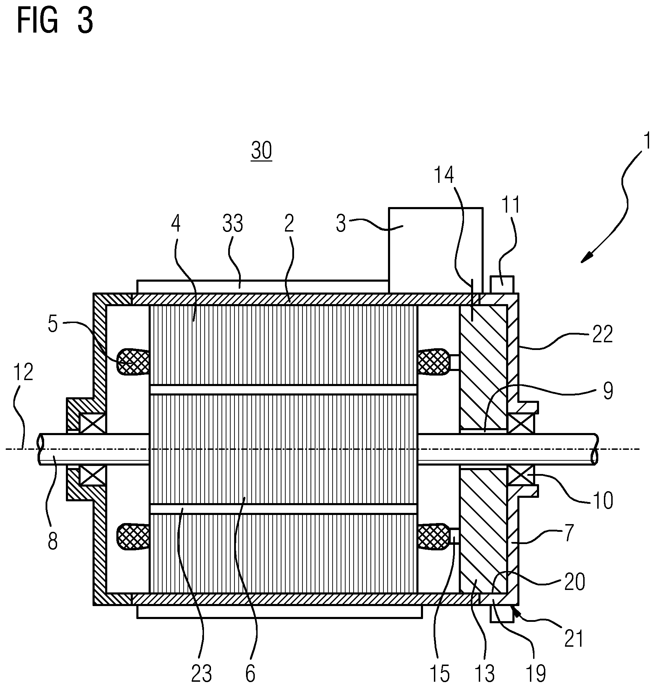

FIG 2 und FIG 3 zeigen ergänzend zu der Ausführung nach FIG 1, dass das Bauvolumen 13 auf das Innere des Lagerschildes 7 beschränkt ist (FIG 2) oder axial über die Seitenwände19 ragt. (FIG 3). Der das Bauvolumen 13 einnehmende Umrichter bildet somit eine vorab montierbare Baueinheit, die lediglich noch mit dem Wicklungssystem 5 und mit dem Klemmenkasten 3 elektrisch kontaktiert werden muss.

Der Topfboden 22 des B-seitigen Lagerschildes 7 ist in den FIG 2,3 eher eben ausgebildet, er kann auch komplett glatt, also in einer Ebene senkrecht zur Achse 12 ausgeführt sein.

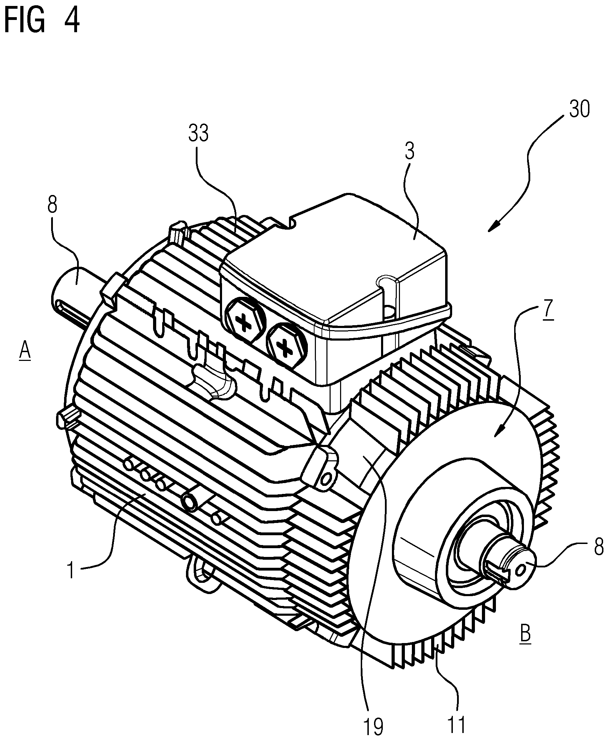

FIG 4 zeigt eine perspektivische Darstellung eines Antriebs 30 nach FIG 1, bei der die Lageraufnahme des Lagers 10 tubusförmig am Topfboden 22 des Lagerschildes 7 ausgebildet ist. Sowohl auf der A-Seite als auch auf der B-Seite ragt die Welle 8 aus dem Antrieb 30. Auf der A-Seite wird die Arbeitsmaschine, wie z.B. ein Kompressor oder eine Pumpe angeschlossen. Auf der B-Seite sind modulartige Anbauten wie eine Bremseinheit, Fremdlüftermodul, oder ein Geber bzw. Drehimpulsgeber anbringbar.

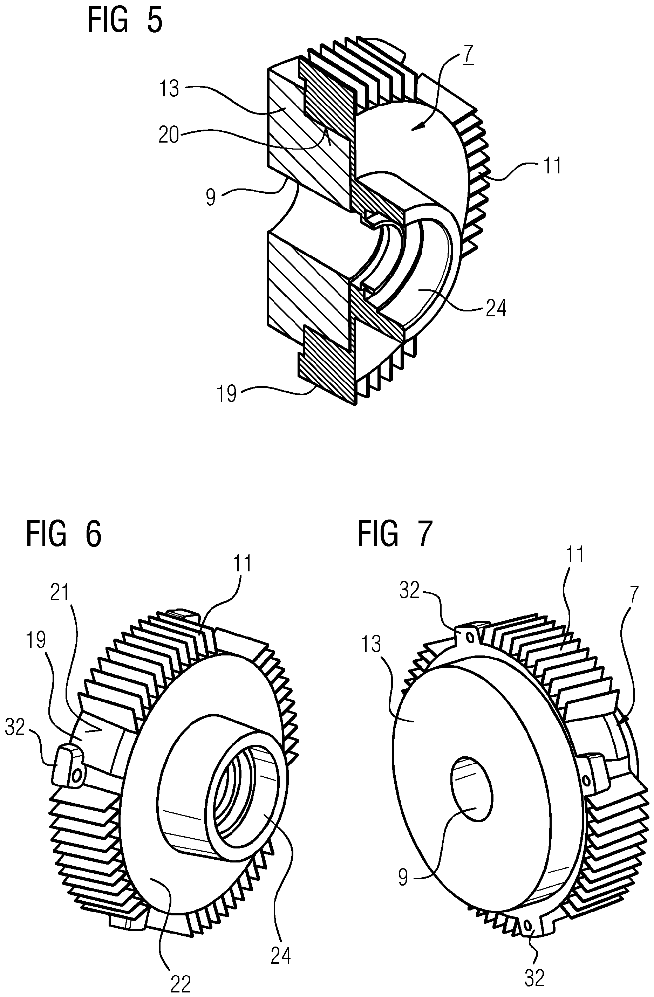

FIG 5 zeigt eine teilperspektivische Darstellung des Lagerschildes 7, aus der sich ergibt, dass der tubusförmige Lageraufnahme und das Lagerschild 7 einstückig ausgebildet sind. Die Kühlrippen an der äußeren Seitenwänden 21 sind abschnittsweise parallel angeordnet.

Das Bauvolumen 13 ragt axial über das Lagerschild 7, wobei sich dann dieser axial über die Seitenwände 19 ragende Abschnitt des Umrichters sich im zusammengebauten Zustand im Gehäuse 2 der Maschine 1 befindet.

Über Befestigungselemente 32 gemäß FIG 6, 7 lässt sich das Lagerschild 7 am Gehäuse 2 befestigen.

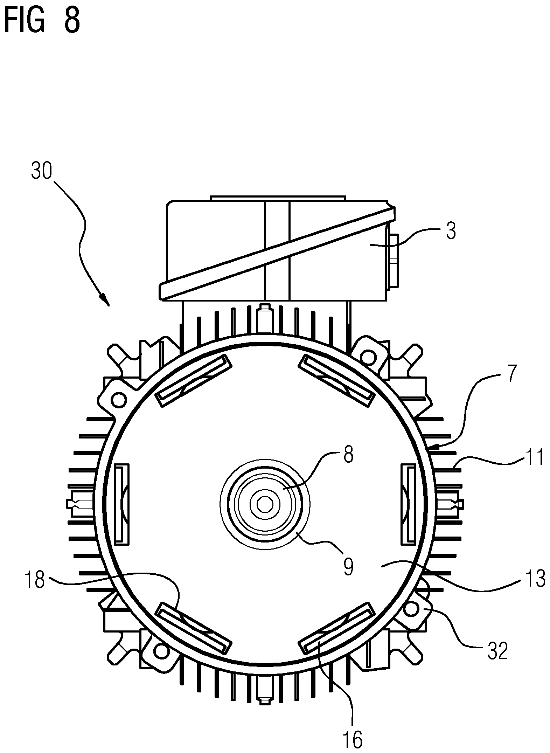

FIG 8 zeigt einen Querschnitt des Antriebs 30 im Bereich des Lagerschildes 7. Neben dem Wellendurchgang 9 im Bauvolumen 13 des Umrichters sind auch axial verlaufende tangential ausgerichtete Taschen 18 zu erkennen, in die besonders die Leistungshalbleiter des Umrichters angeordnet werden, und die dort thermisch an die Seitenwände 19 des Lagerschildes 7 gekoppelt sind.

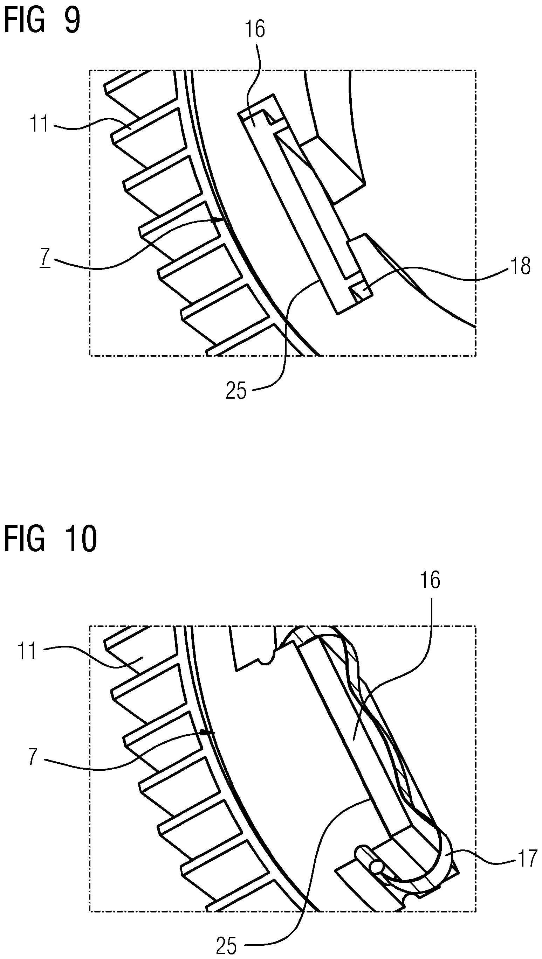

FIG 9 bis11 zeigen Detailansichten verschiedener Befestigungsarten von Leistungshalbleitern am Lagerschild 7. Der Leistungshalbleiter ist gemäß FIG 9 in einer axial leicht konisch verlaufenden nach radial innen teilweise offenen Tasche 18 angeordnet. Durch die konusförmige - also sich verjüngende Querschnittsform der Tasche 18 - wird ein thermisch gut leitender Kontakt vom Leistungshalbleiter zur Innenseite der Tasche 18 und damit zum Lagerschild 7 geschaffen.

Gemäß FIG 10 ist ein Leistungshalbleiter auf einer planen Fläche 25 der inneren Seitenwand 20 des Lagerschildes 7 angeordnet und durch ein Federelemente 17 an die plane Fläche 25 gedrückt.

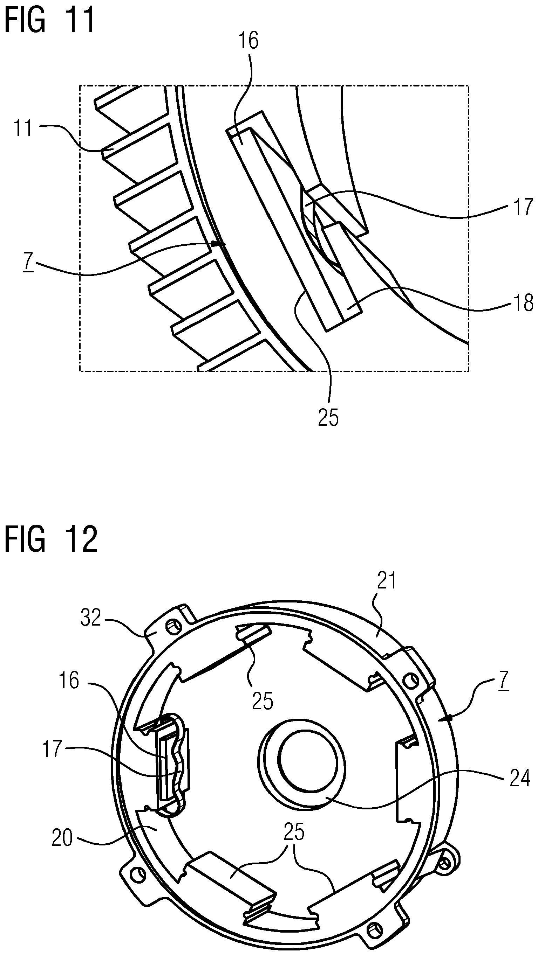

Nach FIG 11 kann ein Federelement 17 auch innerhalb der Tasche 18 angeordnet sein, um das Leistungshalbleiter an die innere Seitenwand 20 zu drücken.

Die planen Flächen 25 sind nach FIG 12 umfänglich an der inneren Seitenwand 20 des Lagerschildes 7 vorgesehen. Die Anzahl dieser planen Flächen 25 richtet sich nach der Anzahl der Leistungshalbleiter oder nach der Anzahl der wärmeintensiven Wärmequellen. Das Lagerschild 7 mit seinen Befestigungselementen 32, seinen Seitenwänden 19, einer ev. tubusförmigen Lageraufnahme, den planen Flächen 25 ist einstückig ausgeführt.

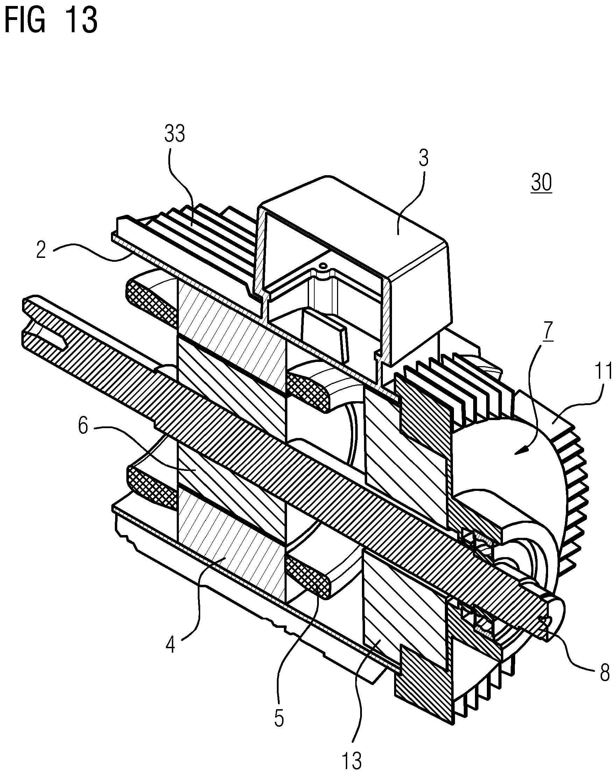

FIG 13 zeigt eine perspektivische Schnitt-Darstellung eines Antriebs 30 ohne das A-seitige Lagerschild. Einen derartigen Antrieb 30 kann ggf. ein Kunde direkt an seine Arbeitsmaschine mit einem passend ausgeführten A-seitigen Flansch montieren.

Axial an die B-Seite kann ein Eigen- oder Fremdlüfter Lüfter vorgesehen werden, der einen Kühlluftstrom generiert, der durch eine optionale Lüfterhaube geführt wird. Der Luftstrom wird über eine Ansaugöffnung in der Haube dem Lüfter zugeführt.

Die aufzuführende Wärme aus der Maschine 1 setzt sich u.a. aus der Verlustwärme von Stator 4 und Rotor 6 zusammen.

Das Lagerschild 7 ist aus thermisch gut leitfähigem Material, so dass die Verlustwärme der Bauelemente des Umrichters, insbesondere der Leistungshalbleiter an den planen Flächen 25 aus dem Bauvolumen 13 an die äußere Seitenwand 21 und/oder einen Kühlluftstrom abgebbar ist. Zusätzliche Kühlrippen 11 am Gehäuse 2 und/oder an der äußeren Seitenwand 21 des Lagerschildes 7, erhöhen den Wärmeabgabeeffekt, insbesondere wenn, eine Lüfterhaube den Kühlluftstrom leitet.

Um die Oberfläche des Lagerschildes 7 zu vergrößern, weist der Topfboden an seiner Außenseite radial erstreckende oder parallel angeordnete Kühlrippen 11 auf.

FIG 8 bis 12 zeigt eine polygonale Innenkontur auf den inneren Seitenwänden 20 des Lagerschildes 7, also der Innenseite des topfähnlich ausgebildeten Lagerschildes 7. Dies schafft plane Flächen 25, die das Anbringen der Bauelemente, insbesondere der Leistungshalbleiter des Umrichters erleichtern, und aufgrund der oben beschriebenen Befestigungen der Leistungshalbleiter an den planen Flächen 25 eine thermisch gut leitende Verbindung schafft.

Vorteilhafterweise sind die Kühlrippen 11 des Lagerschildes 7 und die Kühlrippen 33 des Gehäuses 2 der dynamoelektrischen rotatorischen Maschine 1 in axialer Flucht, um somit dem Kühlluftstrom möglichst wenig Strömungswiderstand entgegenzusetzen.

Eine Kühlung des Antriebs 30 und seiner jeweiligen Abschnitte/Teile/Komponenten erfolgt durch eine oder mehrere Kühleinheiten, die auch als Flüssigkeitskühlung (Kühlmantel am Gehäuse 2 der dynamoelektrischen rotatorischen Maschine 1 und/oder am Lagerschild 7) realisiert werden kann.

Ebenso ist es möglich im Bauvolumen 13 des Umrichters eine oder mehrere Innenlüfter vorzusehen, die innerhalb des Bauvolumens 13 rotieren und zu einer Luftverwirbelung führen, was die Bauelemente des Umrichters zusätzlich kühlt. Der Innenlüfter ist dabei entweder separat als Fremdlüfter temperaturabhängig ansteuerbar, oder magnetisch mit der Welle 8 gekoppelt, so dass eine Art Eigenbelüftung, sobald sich die Welle 8 dreht.

### Bezugszeichenlist

- 1: dynamoelektrische Maschine
- 2: Gehäuse
- 3: Klemmenkasten
- 4: Stator
- 5: Wicklungssystem
- 6: Rotor
- 7: B-seitiges Lagerschild
- 8: Welle
- 9: Wellendurchgang
- 10: BS-Lager
- 11: Kühlrippen
- 12: Achse
- 13: Bauvolumen Leistungselektronik
- 14: Kontaktierung, Klemmenkasten, wie Leistungs- bzw. Steuerkabel
- 15: Kontaktierung, Leistungselektronik zum Wicklungssystem
- 16: IGBT
- 17: Federelement
- 18: Tasche
- 19: Seitenwand, Lagerschild
- 20: Seitenwand, Lagerschild innen
- 21: Seitenwand, Lagerschild außen
- 22: Topfboden Lagerschild
- 23: Luftspalt
- 24: Lageraufnahme
- 25: plane Fläche
- 30: Antrieb
- 31: AS-Lager
- 32: Befestigungselement
- 33: Kühlrippen Gehäuse

## Patentansprüche

1. Antrieb (30) mit
- zumindest einer dynamoelektrischen rotatorischen Maschine (1), die in einem Gehäuse (2) angeordnet ist, mit einem in einem Stator (4) angeordneten Wicklungssystem (5) und einem durch eine Luftspalt (23) davon getrennten Rotor (6), der über zumindest ein Lager (10) eines B-seitigen topfähnlichen Lagerschilds (7) um eine Achse (12) drehbar gelagert ist,
- zumindest einem Umrichter, wobei der Umrichter zumindest einige der folgenden Bauelemente, wie Leistungshalbleiter, Drosseln, Kondensatoren, Steuer- und Regeleinheiten und Kommunikationseinheiten in einem Bauvolumen (13) aufweist, wobei der Umrichter zumindest abschnittsweise von dem B-seitigen Lagerschild (7) radial umgeben ist und dabei zumindest einige Bauelemente des Umrichters mit dem Lagerschild (7) thermisch leitend verbunden sind, indem insbesondere wärmeintensive Bauelemente des Umrichters, an einer inneren Seitenwand (20) des topfähnlichen Lagerschilds (7) angeordnet sind,
- wobei der Umrichter axial betrachtet zwischen der dynamoelektrischen rotatorischen Maschine (1) und dem Lager des B-seitigen topfähnlichen Lagerschilds (7) angeordnet ist.

2. Antrieb (30) nach Anspruch 1, **dadurch gekennzeichnet, dass** die Leistungshalbleiter des Umrichters, wie IGBTs in thermisch direkt leitfähigem Kontakt mit dem Lagerschild stehen, insbesondere mit den Seitenwand (20) des topfähnlichen Lagerschildes (7).

3. Antrieb (30) nach Anspruch 2, **dadurch gekennzeichnet, dass** die Leistungshalbleiter des Umrichters, wie IGBTs in axial verlaufenden, tangential ausgerichteten Taschen (18) an der inneren Seitenwand (20) des topfähnlichen Lagerschilds (7) angeordnet sind.

4. Antrieb (30) nach einem der vorhergehenden Ansprüche, **dadurch gekennzeichnet, dass** der thermisch leitfähige Kontakt zwischen den Bauelementen des Umrichters und dem Lagerschild (7) über einen wärmeleitfähigen Verguss erfolgt.

5. Antrieb (30) nach einem der vorhergehenden Ansprüche, **dadurch gekennzeichnet, dass** der thermisch leitfähige Kontakt zwischen den Bauelementen des Umrichters und dem Lagerschild (7) über konische Ausbildung der Taschen (18) erfolgt.

6. Antrieb (30) nach einem der vorhergehenden Ansprüche, **dadurch gekennzeichnet, dass** der thermisch leitfähige Kontakt zwischen den Bauelementen des Umrichters und dem Lagerschild (7) über Federelemente (17) in und/oder außerhalb der Tasche (18) erfolgt.

7. Antrieb (30) nach einem der vorhergehenden Ansprüche, **dadurch gekennzeichnet, dass** das Lagerschild (7) zumindest an seinen äußeren Seitenwänden (21) abschnittsweise Kühlrippen (11) aufweist.

8. Antrieb (30) nach einem der vorhergehenden Ansprüche, **dadurch gekennzeichnet, dass** die dynamoelektrische rotatorische Maschine (1) in einem Gehäuse (2) eingeschlossen ist, das zumindest abschnittsweise axial verlaufende Kühlrippen aufweist.

9. Antrieb (30) nach den vorhergehenden Ansprüche 7 und 8, **dadurch gekennzeichnet, dass** die Kühlrippen (11) der Lagerschildes (7) und die Kühlrippen des Gehäuses (2) axial fluchten.

10. Antrieb (30) nach einem der vorhergehenden Ansprüche, **dadurch gekennzeichnet, dass** axial außerhalb des Lagerschildes (7) eine Kühleinheit als Lüftereinheit anbringbar ist, die als Eigenlüfter und/oder Fremdlüfter ausgebildet ist und zumindest abschnittsweise über das Lagerschild (7) und die dynamoelektrische rotatorische Maschine (1) einen Kühlluftstrom generiert.

11. Antrieb (30) nach einem der vorhergehenden Ansprüche, **dadurch gekennzeichnet, dass** in dem Bauvolumen (13) ein oder mehrere Lüfter vorgesehen sind, die als Innenlüfter ausgeführt sind und dabei entweder separat als Fremdlüfter temperaturabhängig ansteuerbar, oder magnetisch mit der Welle 8 gekoppelt, so dass eine Art Eigenbelüftung einstellt, sobald sich die Welle 8 dreht.

12. Antrieb (30) nach einem der vorhergehenden Ansprüche, der u.a. bei Kompressoren, Lüftern, Verdichtern, Pumpen im industriellen Umfeld und bei Mobilitätsanwendungen eingesetzt wird.
